# EUROPÄISCHE PATENTSCHRIFT

(11) **EP 2 453 648 B1**
(45) Veröffentlichungstag und Bekanntmachung des Hinweises auf die Patenterteilung: **20.09.2017**
(21) Anmeldenummer: 11008994.3
(22) Anmeldetag: 11.11.2011
(51) Int. Cl.: H04N 5/365, H04N 5/378

(54) **Bildsensor**
Image sensor
Capteur d'images

(30) Priorität: 15.11.2010 DE 102010051440
(43) Veröffentlichungstag der Anmeldung: 16.05.2012
(73) Patentinhaber: Arnold&Richter Cine Technik GmbH&Co. Betriebs KG, 80799 München (DE)
(72) Erfinder: Cieslinski, Michael, 85221 Ottobrunn (DE)
(74) Vertreter: Manitz Finsterwald Patentanwälte PartmbB

(56) Entgegenhaltungen:
- EP-A2- 2 071 826
- US-A1- 2003 146 991
- US-A1- 2006 231 732
- US-A1- 2009 147 089

## Beschreibung

Die vorliegende Erfindung betrifft einen Bildsensor, insbesondere einen CMOS-Bildsensor, für elektronische Kameras, mit einer Vielzahl von in Zeilen und Spalten angeordneten lichtempfindlichen Pixeln, wobei die Pixel einer jeweiligen Spalte über eine jeweilige Spaltenleitung auslesbar sind.

Bei elektronischen Kameras wandeln die lichtempfindlichen Elemente bzw. Pixel durch ein Objektiv der Kamera fallendes Licht in elektrische Signale um. Zum Auslesen eines Bildes wird jedes der Pixel adressiert, wobei ein Pixel einem Bildpunkt des Bildes entspricht. Die in Zeilen und Spalten angeordneten Pixel bilden ein Bildfeld des Bildsensors. Ein Signal, das zu einer durch eine Belichtung gesammelten Ladung des Pixels proportional ist, wird zu einem Datenausgang des Bildsensors geleitet.

Insbesondere sind Bildsensoren bekannt, die für jede Zeile eine eigene Zeilenauswahlleitung und für jede Spalte eine eigene Spaltenleitung aufweisen. Das Auslesen eines solchen Bildsensors erfolgt zeilenweise, d.h. Zeile für Zeile. Hierzu werden mittels der jeweiligen Zeilenauswahlleitung die Pixel der jeweiligen Zeile auf die Spaltenleitungen geschaltet. Üblicherweise ist jeder der Spaltenleitungen ein eigener Spaltenverstärker zugeordnet. Die Spaltenverstärker sind dazu vorgesehen, die an den Spaltenleitungen anliegenden Signale der Pixel der ausgewählten Zeile zu verstärken. Die verstärkten Signale werden über eine Multiplexereinrichtung zu dem Datenausgang oder, falls mehrere Datenausgänge vorgesehen sind, wie es zur Erreichung einer hohen Bildrate bevorzugt ist, den mehreren Datenausgängen des Bildsensors geführt.

Auch bei einer Vielzahl von Datenausgängen wird üblicherweise nicht für jede Spaltenleitung und/oder jeden Spaltenverstärker ein eigener Datenausgang zur Verfügung gestellt, da mit jedem Datenausgang ein erheblicher Platzbedarf und damit Kostenaufwand verbunden ist. Beispielsweise können für einen Bildsensor mit 4096 x 3112 Pixel 32 Datenausgänge (pro Kanal) vorgesehen sein. Die Anzahl der Datenausgänge ist in der Regel also geringer als die Anzahl der Spaltenleitungen und/oder Spaltenverstärker, d.h. dem jeweiligen Datenausgang sind über wenigstens eine Multiplexereinrichtung mehrere Spaltenleitungen und/oder Spaltenverstärker zugeordnet. Dies bedeutet, dass die von den mehreren Spaltenleitungen übertragenen Signale über den jeweiligen "zugeordneten" Datenausgang ausgelesen werden.

Zur Erhöhung des Dynamikumfangs des Bildsensors kann vorgesehen sein, dass die Signale der Pixel durch zwei oder mehr voneinander getrennte Kanäle ausgelesen werden, die die Signale unterschiedlich stark verstärken. In einem solchen Fall kann der Bildsensor z.B. 2 x 32 Datenausgänge umfassen, wobei dann dem jeweiligen Datenausgang des zweiten Kanals dieselben Spaltenleitungen und/oder Spaltenverstärker zugeordnet sind wie dem zugehörigen Datenausgang des ersten Kanals. Insbesondere bilden die dem ersten Kanal zugeordneten Datenausgänge und die dem zweiten Kanal zugeordneten Datenausgänge jeweils eine Gruppe von gleichartigen Datenausgängen mit jeweils gleicher Verstärkung.

In dem vorgenannten Beispiel werden damit jeweils 128 (4096:32) nebeneinander angeordnete Spaltenleitungen und/oder Spaltenverstärker, die eine jeweilige Spaltenleitungsgruppe und/oder Spaltenverstärkergruppe bilden, auf einen jeweiligen Datenausgang gemultiplext. Generell entspricht die Anzahl der Spaltenleitungen je Spaltenleitungsgruppe dem Multiplexfaktor der wenigstens einen Multiplexereinrichtung des Bildsensors, d.h. n Spaltenleitungen je Spaltenleitungsgruppe bei einem n-fachen Multiplexen.

In der Regel können die einzelnen Datenausgänge nicht völlig identisch zueinander hergestellt werden. Vielmehr weichen die Datenausgänge, insbesondere Ausgangsverstärker der Datenausgänge und/oder Analog-Digital-Wandler der Datenausgänge, in ihren Eigenschaften geringfügig voneinander ab. Beispielsweise kann eine Offsetspannung oder eine Verstärkung für unterschiedliche Datenausgänge geringfügig verschieden sein. Die dem jeweils abweichenden Datenausgang zugeordneten Bildpunkte erscheinen dann im Vergleich zu den übrigen Bildpunkten etwas heller oder dunkler.

Eine Spaltenleitungsgruppe ist im Zusammenhang mit der vorliegenden Erfindung dadurch definiert, dass eine jede Spaltenleitungsgruppe mehrere nebeneinander angeordnete Spaltenleitungen umfasst und die Anzahl der Spaltenleitungen der Spaltenleitungsgruppe (zumindest rechnerisch) der Anzahl der Spaltenleitungen entspricht, die einem jeweiligen Datenausgang des Bildsensors zugeordnet sind. Mit anderen Worten entspricht die Anzahl der Spaltenleitungsgruppen der Anzahl der Datenausgänge des Bildsensors, wobei die Spaltenleitungen einer jeden Spaltenleitungsgruppe nebeneinander angeordnet sind. Ein Problem besteht bei einer derartigen Unterteilung der Spaltenleitungen in Spaltenleitungsgruppen, wenn sämtliche Spaltenleitungen einer jeweiligen Spaltenleitungsgruppe demselben Datenausgang (und nur diesem) zugeordnet sind. Eine derartige Unterteilung hat zwar den Vorteil, dass keine horizontalen Busse erforderlich sind, die letztlich die Ausgänge der Spaltenverstärker mit den Datenausgängen verbinden und sich über die gesamte Breite des Bildsensors erstrecken müssen (hoher Energieverbrauch, großer Platzbedarf, geringe Geschwindigkeit). Stattdessen sind die Datenausgänge der jeweiligen Spaltenleitungsgruppe lokal zugeordnet, und horizontale Verbindungen können entsprechend kurz sein oder entfallen. Allerdings weisen bei einer derartigen strikten Unterteilung im Falle einer Abweichung der vorgenannten Art sämtliche einer Spaltenleitungsgruppe zugeordneten Bildpunkte eine geringfügig andere Helligkeit auf, d.h. ein größerer Bereich an zusammenhängenden Bildpunkten bzw. ein ganzer Bildfeldblock weist eine geringfügig andere Helligkeit auf. Es entsteht eine blockförmige Helligkeitsabweichung. Eine abweichende Helligkeit eines oder mehrerer Bildfeldblöcke von der Helligkeit der anderen Bildfeldblöcke ist mit dem Auge gut wahrnehmbar und wirkt auf den Betrachter störend. Der in dem vorgenannten Beispiel erläuterte Bildsensor mit 32 Datenausgängen (pro Kanal) umfasst beispielsweise 32 nebeneinander liegende Bildfeldblöcke.

Das Dokument US 2006/0231732 A1 offenbart einen Bildsensor mit den Merkmalen des Oberbegriffs des Anspruchs 1.

Das Dokument US 2009/0147089 A1 beschreibt einen Bildsensor mit einem Schalternetzwerk vor und einer Multiplexereinrichtung nach mehreren Spaltenverstärkern.

Das Dokument EP 2071826 A2 beschreibt einen Bildsensor, bei dem die Spaltenleitungen in Spaltengruppen unterteilt sind, wobei eine Reihe von Auswahlschaltern vor den Spaltenverstärkern und eine Multiplexereinrichtung nach den Spaltenverstärkern vorgesehen sind.

Das Dokument US 2003/0146991 A1 beschreibt einen Bildsensor mit einer zweistufigen Multiplexereinrichtung.

Der Erfindung liegt die Aufgabe zugrunde, einen Bildsensor der eingangs genannten Art anzugeben, welcher ermöglicht, die Entstehung blockförmiger Helligkeitsabweichung zu unterdrücken.

Diese Aufgabe wird durch einen Bildsensor mit den Merkmalen des Anspruchs 1 gelöst.

Erfindungsgemäß ist es also möglich, die nebeneinander angeordneten Spaltenleitungen einer jeden Spaltenleitungsgruppe auf mehrere verschiedene Datenausgänge zu schalten. Damit müssen nicht mehr sämtliche Bildpunkte eines zusammenhängenden Bildfeldblocks an demselben Datenausgang, insbesondere über denselben Ausgangsverstärker und/oder denselben Analog-Digital-Wandler, ausgegeben werden. Hierdurch kann bei entsprechender Ansteuerung des Schalternetzwerks durch die Steuereinrichtung letztlich erreicht werden, dass die durch einen Datenausgang verursachten Abweichungen im Bild nicht mehr einen gesamten Bildfeldblock betreffen, sondern mehrere Bildfeldblöcke, diese aber jedoch jeweils lediglich teilweise. Die hierfür erforderliche Verschaltung der Spaltenleitungen bzw. Spaltenverstärker mit den Datenausgängen und die erforderliche Ansteuerung sind einfach zu realisieren, da keine beliebig weit reichenden Querverbindungen zwischen den Spaltenleitungen und den Datenausgängen erforderlich sind und die Verschaltung gemäß einem Wiederholungsmuster aufgebaut sein kann. Gleichwohl bleibt der Vorteil erhalten, dass keine horizontalen Busleitungen erforderlich sind, die sich über die gesamte Breite des Bildsensors erstrecken.

Anstelle eines gesamten Bildfeldblocks mit abweichender Helligkeit entstehen einzelne Bildpunkte mit abweichender Helligkeit, die aber statistisch oder quasi-zufällig über einen Bereich des Bilds verteilt werden können, so dass eine Art Punktemuster gebildet wird. Somit ist ein block-übergreifendes "Verwürfeln" einer ansonsten blockförmigen Abweichung möglich.

Da für das menschliche Auge ein solches Punktemuster weniger wahrnehmbar ist als eine blockförmige Abweichung - die Erkennbarkeit eines Punktemusters beträgt in etwa lediglich ein Zehntel der Erkennbarkeit einer blockförmigen Abweichung - kann die subjektive Bildqualität des Bildsensors erheblich verbessert werden.

Bei dem Schalternetzwerk handelt es sich um ein Netzwerk aus Schaltern. Insbesondere umfasst das Schalternetzwerk eine Vielzahl von Schaltern, die derart steuerbar sind, dass verschiedene Möglichkeiten realisierbar sind, die Eingänge des Schalternetzwerks auf die Ausgänge des Schalternetzwerks zu schalten. Üblicherweise entspricht die Anzahl der Eingänge des Schalternetzwerks der Anzahl der Ausgänge des Schalternetzwerks. Bei der Multiplexereinrichtung hingegen ist die Anzahl der Eingänge größer als Anzahl der Ausgänge. Insbesondere erstrecken sich das Schalternetzwerk und/oder die Multiplexereinrichtung über sämtliche Spaltenleitungen und/oder Spaltenverstärker hinweg.

Üblicherweise ist zwischen den Spaltenleitungen einerseits und dem Schalternetzwerk und der Multiplexereinrichtung andererseits eine Reihe von Spaltenverstärkern vorgesehen, wobei jeder Spaltenleitung ein eigener Spaltenverstärker zugeordnet sein kann, d.h. die Anzahl der Spaltenverstärker entspricht der Anzahl der Spaltenleitungen. Hierdurch können alle Pixel einer Zeile gleichzeitig aus dem Bildfeld ausgelesen werden. Grundsätzlich ist es jedoch auch möglich, dass weniger Spaltenverstärker vorgesehen sind als Spalten bzw. Spaltenleitungen, so dass ein jeweiliger Spaltenverstärker mehreren Spalten bzw. Spaltenleitungen zugeordnet ist bzw. für jeweils mehrere Spaltenleitungen ein jeweiliger gemeinsamer Spaltenverstärker vorgesehen ist.

Darüber hinaus kann vorgesehen sein, dass die Anzahl der Spaltenleitungsgruppen der Anzahl der einem Kanal zugeordneten Datenausgänge entspricht, d.h. die Anzahl der Datenausgänge ist identisch zu einem ganzzahligen Vielfachen der Anzahl der Spaltenleitungsgruppen (n ≧ 1, entsprechend der Anzahl der Kanäle).

Grundsätzlich kann auch vorgesehen sein, dass das oder ein Schalternetzwerk bereits vor den Spaltenverstärkern vorgesehen ist bzw. die erfindungsgemäße Zuordnung der Spaltenleitungen auf die Datenausgänge bereits vor den Spaltenverstärkern vorgenommen wird.

Insbesondere bilden die einer jeweiligen Spaltenleitungsgruppe zugeordneten Spaltenverstärker eine jeweilige Spaltenverstärkergruppe. Sofern die Spaltenverstärkergruppen ebenfalls jeweils mehrere nebeneinander angeordnete Spaltenverstärker umfassen, gelten die vorstehenden und nachfolgenden Ausführungen zu den Spaltenleitungsgruppen bzw. Spaltenleitungen - soweit übertragbar - analog für die Spaltenverstärkergruppen bzw. Spaltenverstärker, oder umgekehrt.

Unter einer Datenleitung ist eine Leitung zu verstehen, durch die Signale der Pixel zu den Datenausgängen geleitet werden. Bei den Spaltenleitungen handelt es sich um Datenleitungen (sogenannte Spaltenbusse). Durch die Multiplexereinrichtung wird die Anzahl dieser Datenleitungen um den Multiplexfaktor der Multiplexereinrichtung reduziert, d.h. die Anzahl der ausgehenden Datenleitungen ist geringer als die Anzahl der eingehenden Datenleitungen. Bei dem Schalternetzwerk sind die Anzahl der eingehenden Datenleitungen und die Anzahl der ausgehenden Datenleitungen in der Regel identisch.

Insbesondere ist die Steuereinrichtung dazu ausgebildet, das Schalternetzwerk derart zu steuern, dass die Zuordnung der Spaltenleitungen der jeweiligen Spaltenleitungsgruppe zu den Datenausgängen von einer Zeile zur nächsten Zeile oder von Zeile zu Zeile variiert. Die Verteilung der Pixel einer Spaltenleitungsgruppe auf die Vielzahl von Datenausgängen ist dabei bevorzugt derart realisiert oder gewählt, dass kein regelmäßiges Muster entsteht.

Die jeweilige Spaltenleitung der jeweiligen Spaltenleitungsgruppe kann eine Zuordnungswahrscheinlichkeit zu dem jeweiligen Datenausgang besitzen, die einer relativen Häufigkeit entspricht, mit der die jeweilige Spaltenleitung, insbesondere bezogen auf die verschiedenen Zeilen des Bildsensors, dem jeweiligen Datenausgang zugeordnet ist. Diese Zuordnungswahrscheinlichkeit kann für jede Spaltenleitung beispielsweise einmalig berechnet und dann in einer gespeicherten Nachschlagetabelle (look-up table) hinterlegt werden. Aufgrund einer derartigen vorbestimmten Zuordnungswahrscheinlichkeit kann sichergestellt werden, dass eine eventuelle blockförmige Helligkeitsstörung bzw. Helligkeitsabweichung hinreichend wirksam in horizontaler Richtung verwürfelt bzw. verwischt wird, insbesondere ohne wahrnehmbare Blockränder.

Bevorzugt ist die Zuordnungswahrscheinlichkeit zu wenigstens zwei der Datenausgänge unterschiedlich. Die Häufigkeit, mit der die jeweilige Spaltenleitung der jeweiligen Spaltenleitungsgruppe auf den jeweiligen zugeordneten Datenausgang geschaltet wird, ist daher nicht für alle der jeweiligen Spaltenleitung zugeordneten Datenausgänge gleich. Zusätzlich oder alternativ ist die Zuordnungswahrscheinlichkeit umso kleiner, je weiter der betreffende Datenausgang von der jeweiligen Spaltenleitungsgruppe der jeweiligen Spaltenleitung entfernt ist. Hierdurch kann ein sanfter Übergang der durch einen Datenausgang verursachten Störung bzw. Abweichung im Bild erreicht und ein abrupter Abfall in der Helligkeit von einem Bildfeldblock im Bild zum nächsten Bildfeldblock im Bild vermieden werden. Beispielsweise kann hierzu die Zuordnungswahrscheinlichkeit Gauß-verteilt sein.

Bevorzugt ist die Steuereinrichtung dazu ausgebildet, das Schalternetzwerk derart zu steuern, dass die Zuordnung der Spaltenleitungen der jeweiligen Spaltenleitungsgruppe zu den Datenausgängen von einem Bild zum nächsten Bild oder von Bild zu Bild variiert. Hierdurch kann erreicht werden, dass die Wahrnehmbarkeit der Abweichung eines oder mehrerer Datenausgänge von den übrigen Datenausgängen besonders gering ist.

Nach einer Ausbildung der Erfindung ist die oder eine der mehreren Multiplexereinrichtungen zwischen den Spaltenleitungen und dem Schalternetzwerk, d.h. vor dem Schalternetzwerk angeordnet. Hierdurch wird die Anzahl der am Schalternetzwerk eingehenden Datenleitungen und damit die Anzahl der für das Schalternetzwerk notwendigen Eingänge reduziert, so dass das Schalternetzwerk gegenüber einer Ausbildung mit einer höheren Anzahl an Eingängen eine geringere Komplexität aufweisen kann.

Nach einer anderen Ausbildung der Erfindung ist die oder eine der mehreren Multiplexereinrichtungen zwischen dem Schalternetzwerk und den Datenausgängen, d.h. nach dem Schalternetzwerk angeordnet. Hierdurch kann die Anzahl der nach dem Schalternetzwerk vorliegenden Datenleitungen reduziert und damit die Anzahl der erforderlichen Datenausgänge gering gehalten werden.

Insbesondere in einer Kombination der beiden vorgenannten Anordnungen kann das Schalternetzwerk zwischen einer ersten Multiplexereinrichtung und einer zweiten Multiplexereinrichtung angeordnet sein, wodurch die vorstehend beschriebenen Vorteile erreichbar sind. Mit anderen Worten umfasst der Bildsensor bei dieser Ausführungsform eine erste Multiplexereinrichtung und eine zweite Multiplexereinrichtung zwischen den Spaltenleitungen und den Datenausgängen, wobei zwischen die erste Multiplexereinrichtung und die zweite Multiplexereinrichtung das genannte Schalternetzwerk zwischengeschaltet ist. Hierdurch ist ein blockübergreifendes "Verwürfeln" einer ansonsten blockförmigen Helligkeitsabweichung möglich, wobei das Schalternetzwerk eine geringe Komplexität aufweisen kann und die Anzahl der erforderlichen Datenausgänge gering gehalten werden kann.

Darüber hinaus kann ein weiteres Schalternetzwerk vorgesehen sein, das zwischen der nach dem vorgenannten Schalternetzwerk angeordneten Multiplexereinrichtung und den Datenausgängen angeordnet ist. Durch das weitere Schalternetzwerk kann die Verwürfelungsreichweite, d.h. die Entfernung, über die ein jeweiliges Datensignal bezüglich der jeweils zugrunde liegenden Spaltenleitung in oder entgegen der Zeilenrichtung "verschoben" werden kann, erhöht werden, da das weitere Schalternetzwerk auf bereits doppelt gemultiplexten Datenleitungen basiert. Die vorstehenden und nachfolgenden Ausführungen zu dem Schalternetzwerk gelten - soweit übertragbar - analog für das weitere Schalternetzwerk.

Bevorzugt umfasst die Steuereinrichtung mehrere Steuerleitungen und/oder umfasst das jeweilige Schalternetzwerk mehrere hintereinander geschaltete Zeilen mit Schaltern, wobei eine jeweilige Schalterzeile von einer jeweiligen Steuerleitung steuerbar ist. Dabei ist es nicht erforderlich, dass in einer Schalterzeile einer jeden Datenleitung ein Schalter zugeordnet ist, d.h. es kann auch vorgesehen sein, dass in einer Schalterzeile einem Teil der Datenleitungen keine Schalter zugeordnet sind.

Insbesondere kann die jeweilige Schalterzeile mehrere Kreuzschalter umfassen. Es kann dann von einer geraden Verbindung zwischen zwei Klemmpaaren zweier insbesondere paralleler Datenleitungen auf eine gekreuzte Verbindung gewechselt werden, d.h. die an den Datenleitungen anliegenden Datensignale können miteinander vertauscht werden. Darüber hinaus können zwischen zwei aufeinander folgenden Schalterzeilen sich kreuzende Verbindungen bzw. sich kreuzende Datenleitungen vorgesehen sein. Insbesondere hierdurch kann die vorgenannte Verwürfelungsreichweite erhöht werden.

Grundsätzlich kann die Zuordnung der Spaltenverstärker zu den Datenausgängen von einem an Steuerleitungen für das Schalternetzwerk angelegten Datenwort abhängig sein. Insbesondere entspricht die Wortbreite dabei der Anzahl der Steuerleitungen.

Bevorzugt weist das jeweilige Schalternetzwerk ein sich in Zeilenrichtung wiederholendes Schaltungsmuster auf, um die Komplexität des Schalternetzwerks möglichst gering zu halten und um periodische Ungleichmäßigkeiten zu vermeiden.

Die Erfindung betrifft weiterhin ein Verfahren zum Auslesen eines Bildsensors, insbesondere eines CMOS-Bildsensors, für elektronische Kameras, wobei der Bildsensor eine Vielzahl von Zeilen und Spalten angeordneten lichtempfindlichen Pixeln und eine Vielzahl von Datenausgängen umfasst, wobei die Pixel einer jeweiligen Spalte über eine jeweilige Spaltenleitung ausgelesen werden, wobei dem jeweiligen Datenausgang über wenigstens eine jeweilige Multiplexereinrichtung mehrere Spaltenleitungen zugeordnet werden, wobei die Spaltenleitungen in eine Vielzahl von Spaltenleitungsgruppen unterteilt sind, wobei die jeweilige Spaltenleitungsgruppe mehrere nebeneinander angeordnete Spaltenleitungen umfasst, wobei die Anzahl der Spaltenleitungen der jeweiligen Spaltenleitungsgruppe der Anzahl der dem jeweiligen Datenausgang zugeordneten Spaltenleitungen entspricht, und wobei die Spaltenleitungen der jeweiligen Spaltenleitungsgruppe verschiedenen Datenausgängen zugeordnet werden.

Bevorzugte Ausführungsformen des erfindungsgemäßen Verfahrens ergeben sich in analoger Weise aus den bevorzugten Ausgestaltungen des erfindungsgemäßen Bildsensors.

Nicht beschränkende Ausführungsbeispiele der Erfindung sind in der Zeichnung dargestellt und werden nachfolgend beschrieben.

Es zeigen, jeweils in schematischer Darstellung,
- Fig. 1: einen erfindungsgemäßen Bildsensor mit einer Verwürfelungsschaltung,
- Fig. 2: das Detail A aus Fig. 1,
- Fig. 3a und 3b: die Verwürfelungsschaltung aus Fig. 1 mit zwei Reihen von Multiplexern und zwei Schalternetzwerken bzw. einem einzigen Schalternetzwerk,
- Fig. 4: eine erste Ausführungsform eines Schalternetzwerkes aus Fig. 3a und 3b mit Kreuzschaltern,
- Fig. 5: eine zweite Ausführungsform eines Schalternetzwerkes aus Fig. 3 a und 3b mit Kreuzschaltern,
- Fig. 6: eine Ausführungsform eines Kreuzschalters gemäß den Fig. 4 und 5, und eine Ausführungsform eines Multiplexers gemäß Fig. 3 a und 3b.

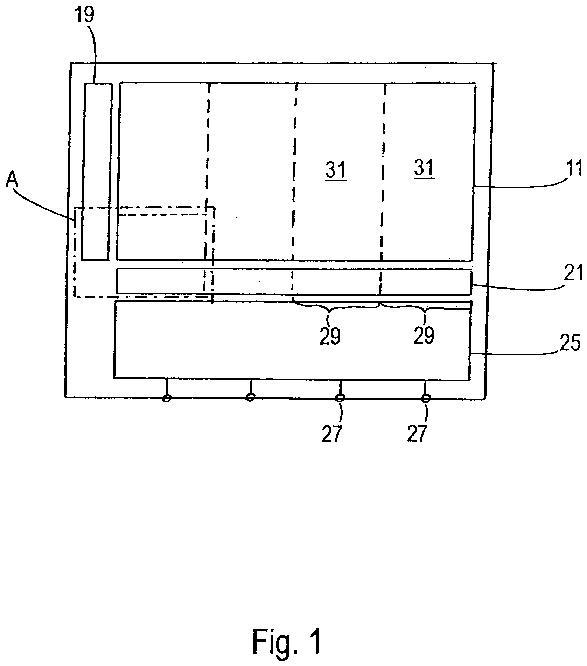

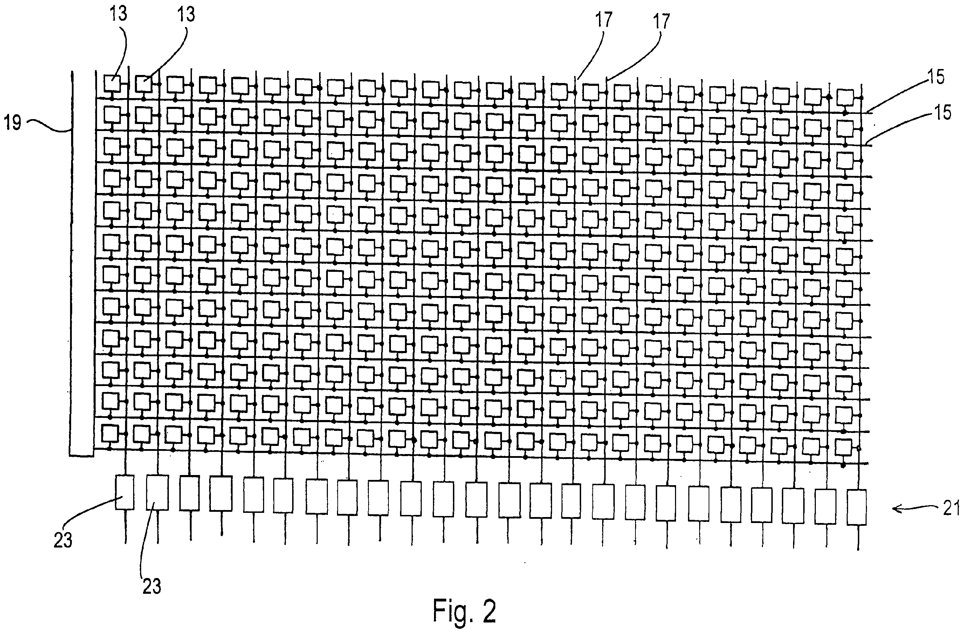

Der in den Fig. 1 und 2 dargestellte einkanalige Bildsensor umfasst ein Bildfeld 11, das aus einer Vielzahl von Pixeln 13 gebildet ist, die entlang Zeilen und Spalten angeordnet sind. Für jede Zeile ist eine eigene Zeilenauswahlleitung 15 vorgesehen, für jede Spalte eine eigene Spaltenleitung 17. Das Auslesen des Bildsensors erfolgt zeilenweise. Hierzu werden aufgrund von Steuersignalen, die mittels der jeweiligen Zeilenauswahlleitung 15 übertragen werden, die Pixel 13 der jeweiligen Zeile auf die Spaltenleitungen 17 geschaltet. Zur Adressierung der der jeweils auszulesenden Zeile zugeordneten Zeilenauswahlleitung 15 ist eine Zeilen-Adressierlogik 19 vorgesehen. Abweichend von der vereinfachten Darstellung gemäß Fig. 2 können für jede Spalte auch mehrere Spaltenleitungen 17 vorgesehen sein, wobei jede Spaltenleitung 17 einer Spalte lediglich mit einem Teil der Pixel 13 dieser Spalte verbunden werden kann.

Unterhalb des Bildfelds 11 ist eine Reihe 21 von Spaltenverstärkern 23 vorgesehen. Die Reihe 21 verläuft parallel zu den Zeilen des Bildfelds 11. Jeder Spaltenleitung 17 ist ein eigener Spaltenverstärker 23 zugeordnet. Die Spaltenverstärker 23 dienen dazu, die an den Spaltenleitungen 17 anliegenden Signale der Pixel 13 der ausgewählten Zeile zu verstärken. Hierzu ist dem jeweiligen Spaltenverstärker 23 eine nicht dargestellte Sample-and-Hold-Schaltung vorgeschaltet, die das Ausgangssignal des jeweiligen Pixels 13 auf einem konstanten Wert hält. Bevorzugt handelt es sich bei den Spaltenverstärkern 23 um Differenzverstärker und es findet im Betrieb eine korrelierte Doppelabtastung (correlated double sampling) statt, d.h. es wird zur Unterdrückung des thermischen Rauschens des Bildsensors neben dem eigentlichen Signal zusätzlich ein Referenzsignal ausgelesen. Die durch die Spaltenverstärker 23 verstärkten Signale der Pixel 13 werden dann über eine Verwürfelungsschaltung 25 zu mehreren Datenausgängen 27 geführt.

Die Spaltenleitungen 17 können aufgrund ihrer räumlichen Anordnung als in eine Vielzahl von Spaltenleitungsgruppen 31 unterteilt angesehen werden, wobei jede Spaltenleitungsgruppe 31 mehrere nebeneinander angeordnete Spaltenleitungen 17 umfasst, so dass im Bildfeld 11 mehrere nebeneinander angeordnete Spaltenleitungsgruppen 31 vorhanden sind. Die Spaltenleitungsgruppen 31 können auch als Bildfeldblöcke bezeichnet werden. Die Anzahl der Spaltenleitungsgruppen 31 entspricht der Anzahl der Datenausgänge 27, d.h. die Anzahl der Spaltenleitungen 17 je Spaltenleitungsgruppe 31 resultiert aus der Anzahl aller Spalten bzw. Spaltenleitungen 17 und der Anzahl der Datenausgänge 27. Ferner entspricht die Anzahl der Spaltenleitungen 17 je Spaltenleitungsgruppe 31 der Anzahl der einem jeweiligen Datenausgang 27 zugeordneten Spaltenleitungen 17. Darüber hinaus sind auch die Spaltenverstärker 23 in eine Vielzahl von den Spaltenleitungsgruppen 31 entsprechenden Spaltenverstärkergruppen 29 unterteilt, die jeweils mehrere nebeneinander angeordnete Spaltenverstärker 23 umfassen.

Bei aus dem Stand der Technik bekannten Bildsensoren ist für jede Spaltenleitungsgruppe 31 bzw. Spaltenverstärkergruppe 29 genau ein eigener Datenausgang 27 vorgesehen, d.h. sämtliche Spaltenleitungen 17 einer Spaltenleitungsgruppe 31 sind demselben Datenausgang 27 zugeordnet, und zwar nur diesem. Bei bekannten Bildsensoren ergibt sich die genannte Unterteilung der Spaltenleitungen 17 in Spaltengruppen 31 also nicht nur rein rechnerisch, sondern auch unmittelbar aus der Kopplung mit einem jeweiligen einzigen Datenausgang 27. Ein Datenausgang 27 umfasst in der Regel einen Ausgangsverstärker und/oder einen Analog-Digital-Wandler, um das jeweilige Datensignal zu verstärken und/oder zu digitalisieren, bevor es den Bildsensor bzw. Bildsensorchip nach extern verlässt. Aufgrund von Prozessabweichungen bei der Herstellung der Bildsensoren kann es nun jedoch vorkommen, dass die elektrischen Eigenschaften zumindest eines Datenausgangs 27 von den elektrischen Eigenschaften der übrigen Datenausgänge 27 abweichen, d.h. durch den zumindest einen Datenausgang 27 werden die Datensignale anders verstärkt als auch durch die übrigen Datenausgänge 27, so dass der zumindest eine andere Datenausgang 27 bei gleichem Eingangssignal eine andere Helligkeit generiert als die übrigen Datenausgänge 27. Da dem zumindest einen anderen Datenausgang 27 eine abgegrenzte Spaltenleitungsgruppe 31 bzw. ein abgegrenzter Bildfeldblock zugeordnet ist, besitzt dieser Bildfeldblock 31 eine von der Helligkeit der übrigen Bildfeldblöcke 31 abweichende Helligkeit. Eine derartige blockförmige Abweichung wird vom Auge wahrgenommen und ist für den Betrachter störend.

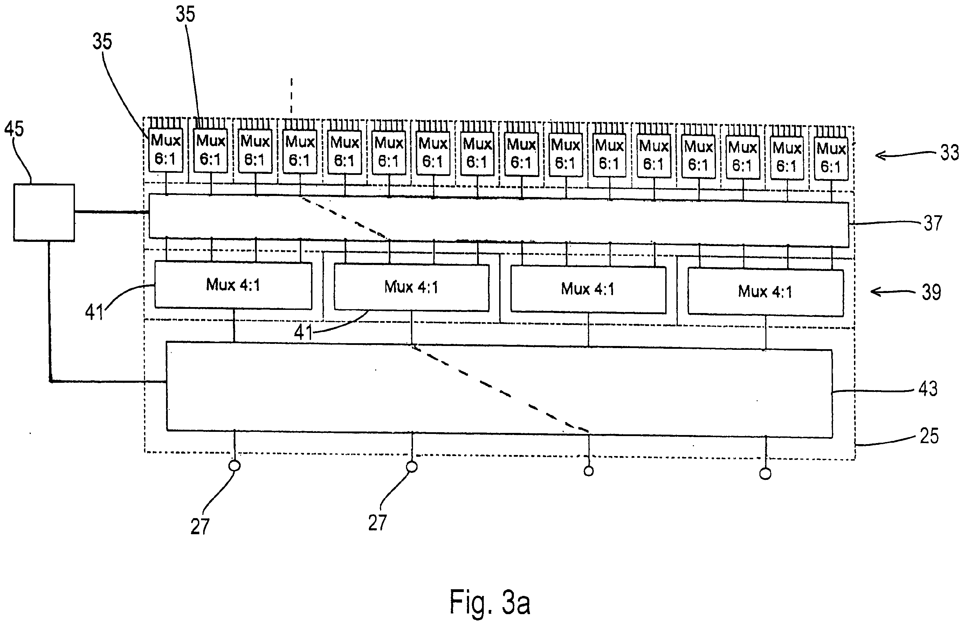

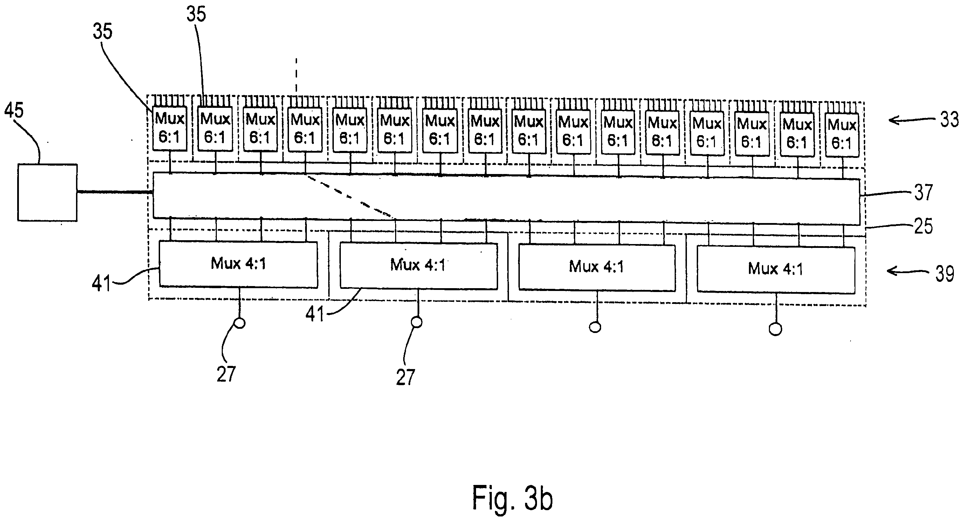

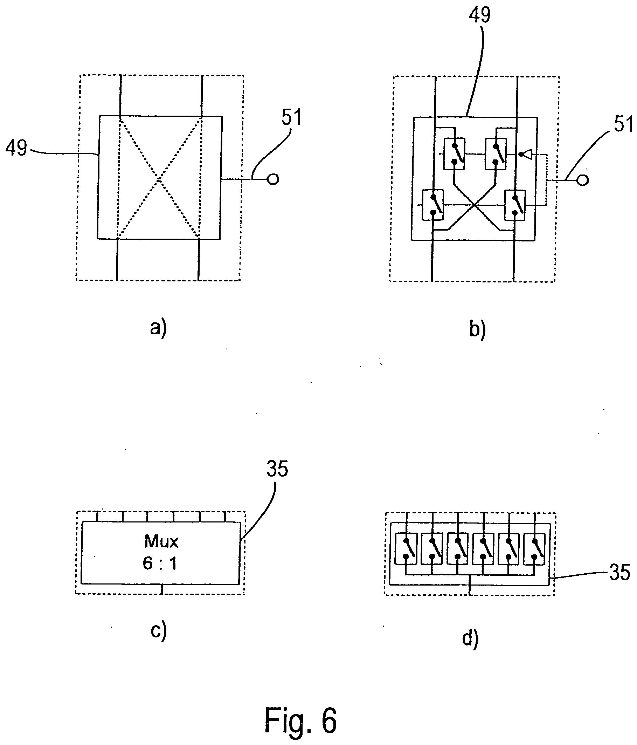

Der erfindungsgemäße Bildsensor weist daher eine sich an die Reihe 21 von Spaltenverstärkern 23 anschließende Verwürfelungsschaltung 25 auf, wie sie beispielhaft in Fig. 3a und 3b dargestellt ist. Die Verwürfelungsschaltung 25 umfasst eingangsseitig eine erste Reihe 33 von Multiplexern 35, denen ein erstes Schalternetzwerk 37 nachgeordnet ist. Durch die erste Reihe 33 von Multiplexern 35 kann die Anzahl der Datenleitungen, die vor der ersten Reihe 33 von Multiplexern 35 der Anzahl der Spaltenverstärker 23 bzw. der Anzahl der Spaltenleitungen 17 entspricht, reduziert werden (in dem hier gezeigten Beispiel um den Faktor 6:1). Hierdurch wird die Komplexität des nachgeordneten ersten Schalternetzwerkes 37 gering gehalten. Eine beispielhafte Realisierung eines Multiplexers 35 mit entsprechenden Schaltern ist in den Fig. 6c und 6d verdeutlicht.

Durch das erste Schalternetzwerk 37, welches an anderer Stelle noch näher beschrieben wird, wird ermöglicht, die Spaltenleitungen 17 einer Spaltenleitungsgruppe 31 auf verschiedene Datenausgänge 27 zu schalten bzw. einem jeweiligen Datenausgang 27 Spaltenleitungen 17 aus unterschiedlichen Spaltenleitungsgruppen 31 zuzuordnen. Die Pixel 13 einer Spaltenleitungsgruppe bzw. eines Bildfeldblocks 31 werden daher nicht alle an demselben Datenausgang 27 ausgegeben, sondern können an verschiedenen Datenausgängen 27 ausgegeben werden. Es findet also eine Verwürfelung zwischen den Bildfeldblöcken 31 und den Datenausgängen 27 statt. Hierdurch kann die Entstehung einer blockförmigen Helligkeitsabweichung im Bild vermieden werden, da nun die Pixel 13 eines Bildfeldblocks 31 durch verschiedene Datenausgänge 27 ausgegeben werden.

Zur Steuerung des ersten Schalternetzwerkes 37 ist eine Steuereinrichtung 45 vorgesehen. Die Steuereinrichtung 45 steuert das erste Schalternetzwerk 37 derart, dass die Zuordnung der Spaltenleitungen 17 zu den Datenausgängen 27 von einer Zeile zur nächsten Zeile variiert, so dass die durch einen abweichenden Datenausgang 27 erzeugten helleren oder dunkleren Bildpunkte nicht einem zusammenhängenden Block im Bild entsprechen, sondern über das gesamte Bildfeld 11 verteilt sind. Anstelle einer blockförmigen Abweichung entsteht daher ein Punktemuster, welches im Vergleich zu einem "Block" vom menschlichen Auge nicht bzw. kaum erkennbar ist, welcher Umstand noch dadurch verstärkt werden kann, wenn das Punktemuster von Bild zu Bild variiert wird.

Die Verwürfelungsschaltung 25 umfasst ferner eine zweite Reihe 39 von Multiplexern 41, die dem ersten Schalternetzwerk 37 nachgeordnet und vor den Datenausgängen 27 angeordnet ist. Durch die zweite Reihe 39 von Multiplexern 41 kann die Anzahl an Datenleitungen und damit die Anzahl an erforderlichen Datenausgängen 27 weiter reduziert werden (hier beispielsweise 4:1).

Zwischen der zweiten Reihe 39 von Multiplexern 41 und den Datenausgängen 27 kann optional noch ein zweites Schalternetzwerk 43 angeordnet sein, welches grundsätzlich analog zu dem ersten Schalternetzwerk 37 aufgebaut sein und angesteuert werden kann (Fig. 3a). Durch das zweite Schalternetzwerk 43 kann eine gegenüber dem ersten Schalternetzwerk 37 höhere Verwürfelungsreichweite erzielt werden, da dem zweiten Schalternetzwerk 43 doppelt gemultiplexte Datenleitungen bzw. Datensignale zugrunde liegen.

Ein zweites Schalternetzwerk 43 ist jedoch nicht zwingend erforderlich, da bereits durch das erste Schalternetzwerk 37 eine hohe Verwürfelungsreichweite erzielt wird. Die in Fig. 3b gezeigte Ausführungsform mit einem einzigen Schalternetzwerk 37 besitzt einen besonders einfachen Aufbau, wobei aufgrund der ersten Reihe 33 von Multiplexern 35 vor dem Schalternetzwerk 37 das Schalternetzwerk 37 nur eine geringe Anzahl von Eingängen benötigt, und wobei aufgrund der zweiten Reihe 39 von Multiplexern 41 nach dem Schalternetzwerk 37 die Anzahl der erforderlichen Datenausgänge 27 gering gehalten wird.

Wie in Fig. 3a und 3b strichliniert angedeutet ist, kann beispielsweise ein Datensignal, das zu einem Pixel 13 aus der 20. Spalte (von links) des Bildfelds 11 gehört und bei einem nach dem Stand der Technik ausgebildeten Bildsensor über den ersten Multiplexer 41 und durch den ersten (d.h. den linken) Datenausgang 27 ausgegeben würde, erfindungsgemäß durch die beiden Schalternetzwerke 37, 43 über den zweiten Multiplexer 41 und den dritten Datenausgang 27 (Fig. 3a) oder durch das Schalternetzwerk 37 über den zweiten Multiplexer 41 und den zweiten Datenausgang 27 (Fig. 3b) ausgegeben werden.

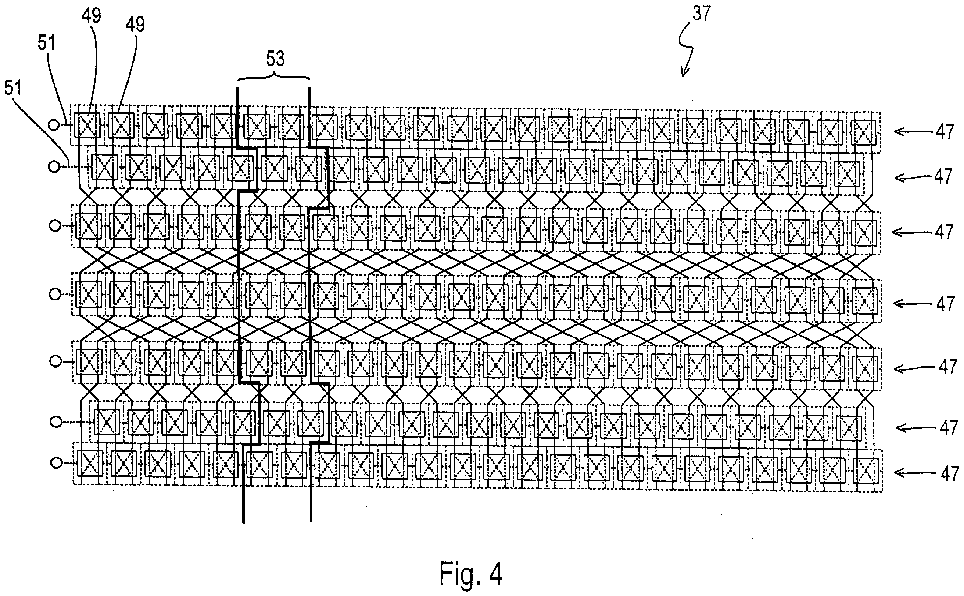

Eine beispielhafte Ausführungsform des ersten Schalternetzwerks 37 ist in Fig. 4 gezeigt. Das erste Schalternetzwerk 37 umfasst mehrere aufeinander folgende Schalterzeilen 47, wobei jede Schalterzeile 47 mehrere Kreuzschalter 49 umfasst. Die Kreuzschalter 49 einer Schalterzeile 47 werden durch eine jeweilige Steuerleitung 51 gesteuert. Hierzu wird an die Steuerleitungen 51 ein Datenwort angelegt. Durch einen Kreuzschalter 49 können die auf zwei parallelen Datenleitungen anliegenden Datensignale unverändert parallel weitergeführt oder über Kreuz vertauscht werden. Eine beispielhafte Realisierung eines Kreuzschalters 49 ist in den Fig. 6a und 6b verdeutlicht. Zwischen zwei Schalterzeilen 47 können die Datenleitungen parallel zueinander verlaufen und/oder sich überkreuzen. Durch einen Kreuzschalter 49 oder sich kreuzende Datenleitungen kann erreicht werden, ein Datensignal entlang der Zeilenrichtung zu verschieben, wobei die Verschiebung bzw. die Entfernung, über die verschoben wird, durch die Stellung der Kreuzschalter 49 beeinflussbar ist. Wie aus Fig. 4 erkennbar ist, besitzt das erste Schalternetzwerk 37 dabei ein sich in Zeilenrichtung wiederholendes Verschaltungsmuster 53, wodurch die Komplexität des ersten Schalternetzwerkes 37 vereinfacht werden kann.

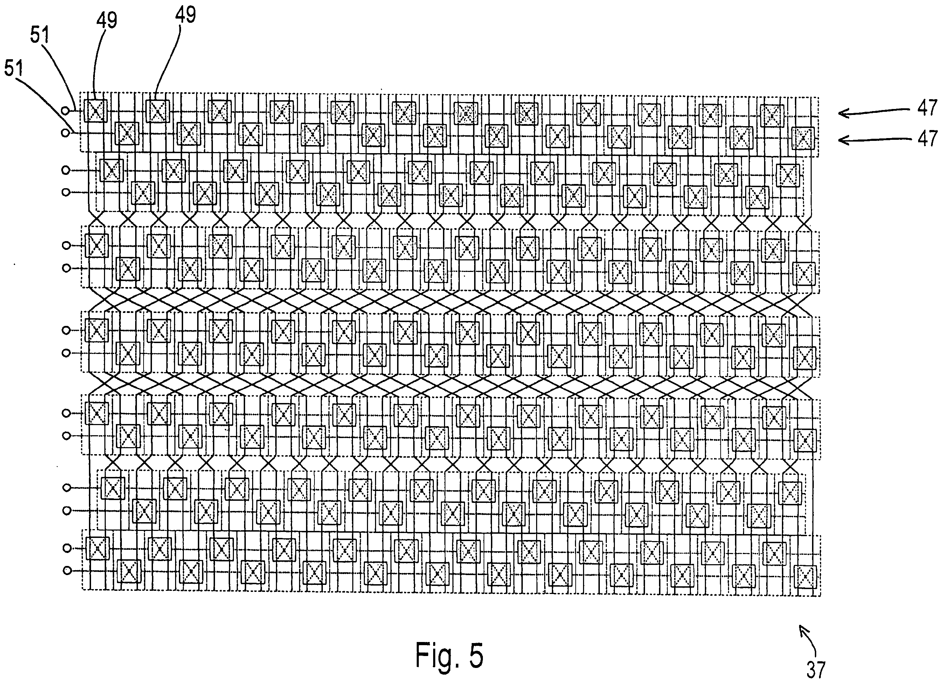

Fig. 5 zeigt ein weiteres Ausführungsbeispiel des ersten Schalternetzwerkes 37 mit Schalterzeilen 47, Kreuzschaltern 49, Steuerleitungen 51 und Verschaltungsmuster. Das zweite Schalternetzwerk 43 ist grundsätzlich in entsprechender Weise wie das erste Schalternetzwerk 37 ausgebildet, d.h. mit Schalterzeilen 47, Kreuzschaltern 49, Steuerleitungen 51 und Verschaltungsmuster.

In Fig. 3a und 3b sind die Multiplexer 35 der ersten Reihe 33 als 6:1-Multiplexer ausgebildet, und es sind insgesamt 16 Multiplexer 35 vorgesehen. Das in Fig. 1 gezeigte Bildfeld 11 besitzt daher 96 Pixel 13 pro Zeile. Die Multiplexer 41 der zweiten Reihe 39 sind als 4:1-Multiplexer ausgebildet, so dass insgesamt ein 24-faches Multiplexen erfolgt. Die Größe des vorgenannten Bildfelds 11 sowie die genannten Multiplexfaktoren sind jedoch lediglich beispielhaft. Nach dem Stand der Technik ausgebildete Bildsensoren können z.B. ein Bildfeld von 4096 x 3112 Pixel umfassen. Darüber hinaus kann ein Multiplexer grundsätzlich als n-facher Multiplexer ausgebildet sein, wobei n auch ungleich 4 oder 6 sein kann. Darüber hinaus kann auch nur eine Reihe von Multiplexern oder ein Schalternetzwerk, oder es können weitere Reihen von Multiplexern oder weitere Schalternetzwerke vorgesehen sein.

Durch die vorliegende Erfindung kann die vom Auge wahrgenommene Bildqualität eines Bildsensors deutlich erhöht werden.

### Bezugszeichenliste

- 11: Bildfeld
- 13: Pixel
- 15: Zeilenauswahlleitung
- 17: Spaltenleitung
- 19: Zeilen-Adressierlogik
- 21: Reihe
- 23: Spaltenverstärker
- 25: Verwürfelungsschaltung
- 27: Datenausgänge
- 29: Spaltenverstärkergruppe
- 31: Spaltenleitungsgruppe
- 33: erste Reihe
- 35: Multiplexer
- 37: erstes Schalternetzwerk
- 39: zweite Reihe
- 41: Multiplexer
- 43: zweites Schalternetzwerk
- 45: Steuereinrichtung
- 47: Schalterzeile
- 49: Kreuzschalter
- 51: Steuerleitung
- 53: Verschaltungsmuster

## Patentansprüche

1. Bildsensor, insbesondere CMOS-Bildsensor, für elektronische Kameras,
mit einer Vielzahl von in Zeilen und Spalten angeordneten lichtempfindlichen Pixeln (13), wobei die Pixel (13) einer jeweiligen Spalte über eine jeweilige Spaltenleitung (17) auslesbar sind, und
mit einer Vielzahl von Datenausgängen (27), wobei dem jeweiligen Datenausgang (27) über wenigstens eine Multiplexereinrichtung (33, 39) mehrere Spaltenleitungen (17) zugeordnet sind,
wobei ein zwischen den Spaltenleitungen (17) und den Datenausgängen (27) angeordnetes Schalternetzwerk (37) vorgesehen ist, und wobei zusätzlich eine Steuereinrichtung (45) zum Steuern des Schalternetzwerkes (37) vorgesehen ist,
**dadurch gekennzeichnet,**
**dass** die Spaltenleitungen (17) in eine Vielzahl von Spaltenleitungsgruppen (31) unterteilt sind, wobei die jeweilige Spaltenleitungsgruppe (31) mehrere nebeneinander angeordnete Spaltenleitungen (17) umfasst, wobei die Anzahl der Spaltenleitungen der jeweiligen Spaltenleitungsgruppe der Anzahl der dem jeweiligen Datenausgang zugeordneten Spaltenleitungen entspricht, und wobei das Schalternetzwerk (37) dazu ausgelegt ist, die Spaltenleitungen (17) der jeweiligen Spaltenleitungsgruppe (31) verschiedenen Datenausgängen (27) zuzuordnen.

2. Bildsensor nach Anspruch 1,
**dadurch gekennzeichnet,**
**dass** die Steuereinrichtung (45) dazu ausgebildet ist, das Schalternetzwerk (37) derart zu steuern, dass die Zuordnung der Spaltenleitungen (17) der jeweiligen Spaltenleitungsgruppe (31) zu den Datenausgängen (27) von einer Zeile zur nächsten Zeile variiert.

3. Bildsensor nach Anspruch 1 oder 2,
**dadurch gekennzeichnet,**
**dass** die jeweilige Spaltenleitung (17) der jeweiligen Spaltenleitungsgruppe (31) eine Zuordnungswahrscheinlichkeit zu dem jeweiligen Datenausgangs (27) besitzt, die einer relativen Häufigkeit entspricht, mit der die jeweilige Spaltenleitung (17) dem jeweiligen Datenausgang (27) zugeordnet ist.

4. Bildsensor nach Anspruch 3,
**dadurch gekennzeichnet,**
**dass** die Zuordnungswahrscheinlichkeit zu wenigstens zwei der Datenausgänge (27) unterschiedlich ist,
und/oder
**dass** die Zuordnungswahrscheinlichkeit umso kleiner ist, je weiter der betreffende Datenausgang (27) von der jeweiligen Spaltenleitungsgruppe (31) der jeweiligen Spaltenleitung (17) entfernt ist, wobei die Zuordnungswahrscheinlichkeit insbesondere einer Gauß-Verteilung entspricht.

5. Bildsensor nach zumindest einem der vorstehenden Ansprüche,
**dadurch gekennzeichnet,**
**dass** die Steuereinrichtung (45) dazu ausgebildet ist, das Schalternetzwerk (37) derart zu steuern, dass die Zuordnung der Spaltenleitungen (17) der jeweiligen Spaltenleitungsgruppe (31) zu den Datenausgängen (27) von einem Bild zum nächsten Bild variiert.

6. Bildsensor nach zumindest einem der vorstehenden Ansprüche,
**dadurch gekennzeichnet,**
**dass** die oder eine der mehreren Multiplexereinrichtungen (33) zwischen den Spaltenleitungen (17) und dem Schalternetzwerk (37) angeordnet ist.

7. Bildsensor nach zumindest einem der vorstehenden Ansprüche,
**dadurch gekennzeichnet,**
**dass** die oder eine der mehreren Multiplexereinrichtungen (39) zwischen dem Schalternetzwerk (37) und den Datenausgängen (27) angeordnet ist.

8. Bildsensor nach zumindest einem der vorstehenden Ansprüche,
**dadurch gekennzeichnet,**
**dass** das Schalternetzwerk (37) zwischen einer ersten Multiplexereinrichtung (33) und einer zweiten Multiplexereinrichtung (39) angeordnet ist.

9. Bildsensor nach Anspruch 7 oder 8,
**dadurch gekennzeichnet,**
**dass** ein weiteres Schalternetzwerk (43) vorgesehen ist, das zwischen der nach dem Schalternetzwerk (37) angeordneten Multiplexereinrichtung (39) und den Datenausgängen (27) angeordnet ist.

10. Bildsensor nach zumindest einem der vorstehenden Ansprüche,
**dadurch gekennzeichnet,**
**dass** die Steuereinrichtung (45) mehrere Steuerleitungen (51) und/oder das jeweilige Schalternetzwerk (37, 43) mehrere hintereinander geschaltete Zeilen (47) mit Schaltern (49) umfasst, wobei eine jeweilige Schalterzeile (47) von einer jeweiligen Steuerleitung (51) steuerbar ist.

11. Bildsensor nach Anspruch 10,
**dadurch gekennzeichnet,**
**dass** die jeweilige Schalterzeile (47) mehrere Kreuzschalter (49) umfasst und/oder zwischen zwei aufeinander folgende Schalterzeilen (47) sich kreuzende Verbindungen vorgesehen sind.

12. Bildsensor nach zumindest einem der vorstehenden Ansprüche,
**dadurch gekennzeichnet,**
**dass** die Zuordnung der Spaltenleitungen (17) zu den Datenausgängen (27) von einem an Steuerleitungen (51) für das jeweilige Schalternetzwerk (37, 43) angelegten Datenwort abhängig ist.

13. Bildsensor nach zumindest einem der vorstehenden Ansprüche,
**dadurch gekennzeichnet,**
**dass** das jeweilige Schalternetzwerk (37, 43) ein sich in Zeilenrichtung wiederholendes Verschaltungsmuster (53) aufweist.

14. Verfahren zum Auslesen eines Bildsensors, insbesondere eines CMOS-Bildsensors, für elektronische Kameras, wobei der Bildsensor eine Vielzahl von in Zeilen und Spalten angeordneten lichtempfindlichen Pixeln (13) und eine Vielzahl von Datenausgängen (27) umfasst, wobei die Pixel (13) einer jeweiligen Spalte über eine jeweilige Spaltenleitung (17) ausgelesen werden, wobei dem jeweiligen Datenausgang (27) über wenigstens eine jeweilige Multiplexereinrichtung (33, 39) mehrere Spaltenleitungen (17) zugeordnet sind,
**dadurch gekennzeichnet,**
**dass** die Spaltenleitungen (17) in eine Vielzahl von Spaltenleitungsgruppen (31) unterteilt sind, wobei die jeweilige Spaltenleitungsgruppe (31) mehrere nebeneinander angeordnete Spaltenleitungen (17) umfasst, und wobei die Anzahl der Spaltenleitungen der jeweiligen Spaltenleitungsgruppe der Anzahl der dem jeweiligen Datenausgang zugeordneten Spaltenleitungen entspricht,
wobei die Spaltenleitungen (17) der jeweiligen Spaltenleitungsgruppe (31) verschiedenen Datenausgängen (27) zugeordnet werden.

15. Verfahren nach Anspruch 14,
**dadurch gekennzeichnet,**
**dass** die Spaltenleitungen (17) der jeweiligen Spaltenleitungsgruppe (31) zumindest über eine erste Multiplexereinrichtung (33), ein nachfolgendes Schalternetzwerk (37) und eine nachfolgende zweite Multiplexereinrichtung (39) den verschiedenen Datenausgängen (27) zugeordnet werden.

## Claims

1. An image sensor, in particular a CMOS image sensor, for electronic cameras,
having a plurality of light sensitive pixels (13) arranged in rows and columns, wherein the pixels (13) of a respective column can be read out via a respective column line (17); and
having a plurality of data outputs (27), wherein a plurality of column lines (17) are associated with the respective data output (27) via at least one multiplexer device (33, 39),
wherein a switch network (37) is provided which is arranged between the column lines (17) and the data outputs (27); and
wherein a control device (45) is additionally provided for controlling the switch network (37),
**characterized in that**
the column lines (17) are divided into a plurality of column line groups (31), with the respective column line group (31) comprising a plurality of column lines (17) arranged next to one another, with the number of column lines of the respective column line group corresponding to the number of the column lines associated with the respective data output, and with the switch network (37) being configured to associate the column lines (17) of the respective column line group (31) with different data outputs (27).

2. An image sensor in accordance with claim 1,
**characterized in that**
the control device (45) is configured to control the switch network (37) such that the association of the column lines (17) of the respective column line group (31) with the data outputs (27) varies from one row to the next row.

3. An image sensor in accordance with claim 1 or claim 2,
**characterized in that**
the respective column line (17) of the respective column line group (31) has an association probability with the respective data output (27) which corresponds to a relative frequency at which the respective column line (17) is associated with the respective data output (27).

4. An image sensor in accordance with claim 3,
**characterized in that**
the association probability with at least two of the data outputs (27) is different;
and/or
**in that** the association probability is the smaller, the further the respective data output (27) is remote from the respective column line group (31) of the respective column line (17), with the association probability in particular corresponding to a Gaussian distribution.

5. An image sensor in accordance with at least one of the preceding claims,
**characterized in that**
the control device (45) is configured to control the switch network (37) such that the association of the column lines (17) of the respective column line group (31) with the data outputs (27) varies from one image to the next image.

6. An image sensor in accordance with at least one of the preceding claims,
**characterized in that**
the or one of the plurality of multiplexer devices (33) is arranged between the column lines (17) and the switch network (37).

7. An image sensor in accordance with at least one of the preceding claims,
**characterized in that**
the or one of the plurality of multiplexer devices (39) is arranged between the switch network (37) and the data outputs (27).

8. An image sensor in accordance with at least one of the preceding claims,
**characterized in that**
the switch network (37) is arranged between a first multiplexer device (33) and a second multiplexer device (39).

9. An image sensor in accordance with claim 7 or claim 8,
**characterized in that**
a further switch network (43) is provided which is arranged between the multiplexer device (39) arranged after the switch network (37) and the data outputs (27).

10. An image sensor in accordance with at least one of the preceding claims,
**characterized in that**
the control device (45) comprises a plurality of control lines (51); and/or **in that** the respective switch network (37, 43) comprises a plurality of rows (47) with switches (49) connected after one another, with a respective switch row (47) being controllable by a respective control line (51).

11. An image sensor in accordance with claim 10,
**characterized in that**
the respective switch row (47) comprises a plurality of intermediate switches (49); and/or **in that** crossover connections are provided between two sequential switch rows (47).

12. An image sensor in accordance with at least one of the preceding claims,
**characterized in that**
the association of the column lines (17) with the data outputs (27) is dependent on a data word applied to control lines (51) for the respective switch network (37, 43).

13. An image sensor in accordance with at least one of the preceding claims,
**characterized in that**
the respective switch network (37, 43) has a circuit pattern (53) repeating in the row direction.

14. A method for the reading out of an image sensor, in particular of a CMOS image sensor, for electronic cameras, wherein the image sensor comprises a plurality of light sensitive pixels (13) arranged in rows and columns and a plurality of data outputs (27); wherein the pixels (13) of a respective column are read out via a respective column line (17); and wherein a plurality of column lines (17) are associated with the respective data output (27) via at least one respective multiplexer device (33, 39),
**characterized in that**
the column lines (17) are divided into a plurality of column line groups (31), with the respective column line group (31) comprising a plurality of column lines (17) arranged next to one another, and with the number of column lines of the respective column line group corresponding to the number of the column lines associated with the respective data output,
wherein the column lines (17) of the respective column line group (31) are associated with different data outputs (27).

15. A method in accordance with claim 14,
**characterized in that**
the column lines (17) of the respective column line group (31) are associated with the different data outputs (27) via at least one first multiplexer device (33), a following switch network (37) and a following second multiplexer device (39).

## Revendications

1. Capteur d'image, en particulier capteur d'image CMOS, pour caméra électronique,
qui comprend une multitude de pixels photosensibles (13) disposés en lignes et en colonnes, les pixels (13) d'une colonne respective pouvant être lus via un conducteur de colonne respectif (17), et
qui comprend une multitude de sorties de données (27), plusieurs conducteurs de colonne (17) étant associés à la sortie de données respective (27) via au moins un dispositif multiplexeur (33, 39),
dans lequel est prévu un réseau de commutateurs (37) disposé entre les conducteurs de colonne (17) et les sorties de données (27), et
dans lequel est prévu en supplément un dispositif de commande (45) pour commander le réseau de commutateurs (37),
**caractérisé en ce que**
les conducteurs de colonne (17) sont subdivisés en une multitude de groupes de conducteurs de colonne (31), le groupe de conducteurs de colonne respectif (31) comprend plusieurs conducteurs de colonne (17) disposés les uns à côté des autres, le nombre des conducteurs de colonne du groupe de conducteurs de colonne respectif correspond au nombre de conducteurs de colonne associés à la sortie de données respective, et le réseau de commutateurs (37) est conçu pour associer les conducteurs de colonne (17) du groupe de conducteurs de colonne respectif (31) à différentes sorties de données (27).

2. Capteur d'image selon la revendication 1,
**caractérisé en ce que**
le dispositif de commande (45) est conçu pour commander le réseau de commutateurs (37) de telle sorte que l'association des conducteurs de colonne (17) du groupe de conducteurs de colonne respectif (31) aux sorties de données (27) varie d'une ligne à l'autre.

3. Capteur d'image selon la revendication 1 ou 2,
**caractérisé en ce que**
le conducteur de colonne respectif (17) du groupe de conducteurs de colonne respectif (31) possède une probabilité d'association à la sortie de données respective (27), qui correspond à une fréquence relative à laquelle le conducteur de colonne respectif (17) est associé à la sortie de données respective (27).

4. Capteur d'image selon la revendication 3,
**caractérisé en ce que**
la probabilité d'association à au moins deux des sorties de données (27) est différente,
et/ou
**en ce que** la probabilité d'association est d'autant plus petite que la sortie de données concernée (27) est éloignée du groupe de conducteurs de colonne respectif (31) du conducteur de colonne respectif (17), la probabilité d'association correspondant en particulier à une distribution gaussienne.

5. Capteur d'image selon l'une des revendications précédentes,
**caractérisé en ce que**
le dispositif de commande (45) est conçu pour commander le réseau de commutateurs (37) de telle sorte que l'association des conducteurs de colonne (17) du groupe de conducteurs de colonne respectif (31) aux sorties de données (27) varie d'une image à l'autre.

6. Capteur d'image selon l'une des revendications précédentes,
**caractérisé en ce que**
le ou l'un parmi les plusieurs dispositifs multiplexeurs (33) est agencé entre les conducteurs de colonne (17) et le réseau de commutateurs (37).

7. Capteur d'image selon l'une des revendications précédentes,
**caractérisé en ce que**
le ou l'un parmi les plusieurs dispositifs multiplexeurs (39) est agencé entre le réseau de commutateurs (37) et les sorties de données (27).

8. Capteur d'image selon l'une des revendications précédentes,
**caractérisé en ce que**
le réseau de commutateurs (37) est agencé entre un premier dispositif multiplexeur (33) et un second dispositif multiplexeur (39).

9. Capteur d'image selon la revendication 7 ou 8,
**caractérisé en ce que**
il est prévu un autre réseau de commutateurs (43) qui est agencé entre le dispositif multiplexeur (39) agencé en aval du réseau de commutateurs (37) et les sorties de données (27).

10. Capteur d'image selon l'une des revendications précédentes,
**caractérisé en ce que**
le dispositif de commande (45) comprend plusieurs conducteurs de commande (51) et/ou le réseau de commutateurs respectif (37, 43) comprend plusieurs lignes (47) disposées les unes derrière les autres et pourvues de commutateurs (49), une ligne de commutateurs respective (47) pouvant être commandée par un conducteur de commande respectif (51).

11. Capteur d'image selon la revendication 10,
**caractérisé en ce que**
la ligne de commutateurs respective (47) comprend plusieurs permutateurs (49) et/ou **en ce qu'**il est prévu des connexions qui se croisent entre deux lignes de commutateurs successives (47).

12. Capteur d'image selon l'une des revendications précédentes,
**caractérisé en ce que**
l'association des conducteurs de colonne (17) aux sorties de données (27) dépend d'un mot de données appliqué à des conducteurs de commande (51) pour le réseau de commutateurs respectif (37, 43).

13. Capteur d'image selon l'une des revendications précédentes,
**caractérisé en ce que**
le réseau de commutateurs respectif (37, 43) présente un motif d'interconnexion (53) répétitif en direction de ligne.

14. Procédé de lecture d'un capteur d'image, en particulier d'un capteur d'image CMOS, pour caméra électronique,
dans lequel le capteur d'image comprend une multitude de pixels photosensibles (13) disposés en lignes et en colonnes et une multitude de sorties de données (27), les pixels (13) d'une colonne respective étant lus via un conducteur de colonne respectif (17), et plusieurs conducteurs de colonne (17) sont associés à la sortie de données respective (27) via au moins un dispositif multiplexeur respectif (33, 39),
**caractérisé en ce que**
les conducteurs de colonne (17) sont subdivisés en une multitude de groupes de conducteurs de colonne (31), le groupe de conducteurs de colonne respectif (31) comprend plusieurs conducteurs de colonne (17) disposés les uns à côté des autres, le nombre des conducteurs de colonne du groupe de conducteurs de colonne respectif correspond au nombre de conducteurs de colonne associés à la sortie de données respective, et les conducteurs de colonne (17) du groupe de conducteurs de colonne respectif (31) sont associés à différentes sorties de données (27).

15. Procédé selon la revendication 14,
**caractérisé en ce que**
les conducteurs de colonne (17) du groupe de conducteurs de colonne respectif (31) sont associés aux différentes sorties de données (27) via au moins un premier dispositif multiplexeur (33), un réseau de commutateurs successif (37) et via un second dispositif multiplexeur successif (39).
